# EUROPEAN PATENT APPLICATION

(11) **EP 3 644 300 A1**
(43) Date of publication of application: **29.04.2020**
(21) Application number: 18819973.1
(22) Date of filing: 13.06.2018
(51) Int. Cl.: G09B 19/16, A63F 13/426, A63F 13/44, A63F 13/533, A63F 13/79, G09B 5/02, G09B 9/04

(54) **COMPUTER PROGRAM, SERVER DEVICE, TABLET-TYPE ELECTRONIC EQUIPMENT, ELECTRONIC EQUIPMENT FOR CONNECTING TELEVISION DEVICE, USER WATCHING SYSTEM AND USER WATCHING METHOD**

(30) Priority: 20.06.2017 JP 2017120377; 31.08.2017 JP 2017166324
(71) Applicant: Sendai Television Incorporated., Sendai, Miyagi 980-0011 (JP); Tohoku University, Sendai-shi, Miyagi 980-8577 (JP)
(72) Inventor: KAWASHIMA Ryuta, Sendai-shi Miyagi 980-8577 (JP); KURAUCHI Hiroshi, Sendai Miyagi 980-0011 (JP); SUZUKI Takaaki, Sendai Miyagi 980-0011 (JP); OTA Shigeru, Sendai Miyagi 980-0011 (JP); ISHIHARA Eri, Sendai Miyagi 980-0011 (JP)
(74) Representative: Plasseraud IP
(86) International application number: PCT/JP2018/022500
(87) International publication number: WO 2018/235684

(57) **Abstract**

To provide a computer program, a server device, a tablet electronic device, an electronic device for connection to a television set, a user monitoring system, and a user monitoring method that can embody a game for improving a user's driving ability.

A computer is caused to perform a display output control function and a determination function as a first game, the display output control function displays an attribute object having an attribute in a predetermined area of a display screen, and the determination function determines whether a second signal input by a user has been input when the attribute object has a specific attribute.

## Description

### [Technical Field]

The present invention relates to a computer program, a server device, a tablet electronic device, and an electronic device for connection to a television set and particularly to a computer program, a server device, a tablet electronic device, and an electronic device for connection to a television set that can embody a game for improving driving ability of a user.

The present invention also relates to a user monitoring system and a user monitoring method and more particularly to a system and method of monitoring a user on the basis of game play information of the user.

### [Background Art]

In recent years, depopulation in provincial towns in which super-aging and declining birthrates are progressing has accelerated. Combination and reorganization of public facilities, public transportation, hospitals, stores, and the like in a depopulated region may affect living environments of residents.

In some local governments, alternative means for discontinued public transportation services may be provided, but continuation of such alternative means is precarious due to decreases in tax revenue that accompany decreases in population. Accordingly, it is foreseen that living in such regions will be difficult if residents do not drive vehicles themselves.

However, traffic accidents due to driving mistakes by aged persons who make up most of such residents are likely to increase. Most reasons thereof are considered to be "deterioration in cognitive ability (a decrease in working speed)."

Currently, traffic accidents by aged persons are a social problem and cause a growing trend of aged persons' licenses being turned in. In these circumstances, there are many techniques of diagnosing or determining driving ability of aged persons such that aged persons with low driving ability do not drive. For example, Patent Literature 1 discloses an automobile driving ability determining device and an automobile driving ability determining method for objectively determining automobile driving ability of aged persons or the like.

Recently, super-aging and declining birthrates have progressed, and households consisting of aged persons living alone or as couples are increasing. In many cases, a household of aged persons and their children live in separate places. Therefore, there is an increasing need for children or the like to remotely monitor states of aged persons.

As an example of such a technique, Patent Literature 1 discloses a state notification system that includes a receiver unit receiving a signal of a remote controller for operating a television receiver or the like and outputting a pulse signal, automatically detects a living state of a resident and periodically notifies of the detected state by editing the pulse signal from the receiver unit and notifying of the edited result by e-mail.

### [Citation List]

### [Patent Literature]

[Patent Literature 1]
   Japanese Unexamined Patent Application, First Publication No. 2016-218230
[Patent Literature 2]
   Japanese Unexamined Patent Application, First Publication No. 2006-178574

### [Summary of Invention]

### [Technical Problem]

However, simply prohibiting driving by aged persons living in such regions as those mentioned above does not solve the problem of difficulty in living.

Therefore, an objective of the invention is to provide a computer program, a server device, a tablet electronic device, and an electronic device for connection to a television set that can provide a game for improving a user's driving ability such that extension of a safe driving lifespan of an aged person is achieved by training the aged person without revoking the aged person's license.

In the above-mentioned technique, because only information indicating that an aged person powers on/off a television receiver can be obtained, an amount of information in a system monitoring an aged person is small. Accordingly, such monitoring of an aged person is not satisfactory.

Therefore, an objective of the invention is to provide a user monitoring system and a user monitoring method that can determine a user's state on the basis of game information of a game which the user has played as well as whether a user such as an aged person has been active.

### [Solution to Problem]

A computer program according to the invention causes a computer to perform: as a first game, a display output control function of displaying a mobile object in a predetermined area of a display screen and displaying a specific object in the predetermined area; and a determination function of determining whether a first signal input by a user has been input when the specific object and the mobile object have a predetermined positional relationship, wherein the display output control function additionally displays an attribute object with attributes in another predetermined area of the display screen, the determination function determines whether a second signal input by the user has been input when the attribute object is displayed in the other predetermined area and has a specific attribute, the attributes include an attribute indicating that an object is actually mobile and an attribute indicating that an object is actually immobile, and the attribute object is an object indicating that the object is actually mobile and/or the object is actually immobile.

The determination function may additionally determine whether the second signal input by the user has been input when the attribute object is displayed in the other predetermined area and the specific attribute is an attribute indicating that an object is actually mobile.

The computer program according to the invention is the computer program according to claim 1 or 2, causing the computer to additionally perform a voice output control function of outputting voice for assisting with playing of the first game in response to the user's request.

The computer program according to the invention is the computer program according to any one of claims 1 to 3, causing the computer to additionally perform: a storage function of storing a play history of the first game in a predetermined storage unit in correlation with the user; and a notification information generating function of generating notification information for notifying a predetermined specific device of the play history of the first game stored in correlation with the user.

The computer program according to the invention is the computer program according to any one of claims 1 to 4, causing the second computer to perform: as a second game, a display output control function of displaying an area object which occupies a predetermined area of the display screen and a passing object which is displayed to pass behind the area object on the display screen; and a determination function of determining whether a third signal input by the user has been input when the passing object is recognized to come out of the area object, the computer program causing the computer to perform: as a third game, a display output control function of displaying a plurality of numeral objects with various sizes in which various numerals are marked on the display screen; and a determination function of determining whether a signal input by the user is a signal corresponding to a numeral object in which a numeral satisfying conditions is marked out of the numeral objects, the computer program causing the computer to additionally perform: a storage function of storing play histories of the first game, the second game, and the third game in a predetermined storage unit in correlation with the user; and an extraction function of extracting one game which is suitable for improving the user's driving ability out of the first game, the second game, and the third game on the basis of the play histories.

The computer program according to the invention is the computer program according to any one of claims 1 to 5, causing the computer to additionally perform a music play control function of playing a predetermined piece of music on the basis of a result of determination from the determination function.

A server device according to the invention includes: a display output control unit configured to display a mobile object in a predetermined area of a display screen and displaying a specific object in the predetermined area; and a determination unit configured to determine whether a first signal input by a user has been input when the specific object and the mobile object have a predetermined positional relationship, wherein the display output control unit additionally displays an attribute object with attributes in another predetermined area of the display screen, the determination unit determines whether a second signal input by the user has been input when the attribute object is displayed in the other predetermined area and has a specific attribute, the attributes include an attribute indicating that an object is actually mobile and an attribute indicating that an object is actually immobile, and the attribute object is an object indicating that the object is actually mobile and/or the object is actually immobile.

A tablet electronic device according to the invention includes: a display screen of a touch panel type; a display output control unit configured to display a mobile object in a predetermined area of a display screen and displaying a specific object in the predetermined area; and a determination unit configured to determine whether a first signal input by a user has been input when the specific object and the mobile object have a predetermined positional relationship, wherein the display output control unit additionally displays an attribute object with attributes in another predetermined area of the display screen, the determination unit determines whether a second signal input by the user has been input when the attribute object is displayed in the other predetermined area and has a specific attribute, the attributes include an attribute indicating that an object is actually mobile and an attribute indicating that an object is actually immobile, and the attribute object is an object indicating that the object is actually mobile and/or the object is actually immobile.

An electronic device for connection to a television set according to the invention includes: a connection terminal for connection to a television set; a display output control unit configured to display a mobile object in a predetermined area of a display screen and displaying a specific object in the predetermined area; and a determination unit configured to determine whether a first signal input by a user has been input when the specific object and the mobile object have a predetermined positional relationship, wherein the display output control unit additionally displays an attribute object with attributes in another predetermined area of the display screen, the determination unit determines whether a second signal input by the user has been input when the attribute object is displayed in the other predetermined area and has a specific attribute, the attributes include an attribute indicating that an object is actually mobile and an attribute indicating that an object is actually immobile, and the attribute object is an object indicating that the object is actually mobile and/or the object is actually immobile.

A user monitoring system according to the invention is a user monitoring system including: a first terminal device that is provided in a user's home; a server device that is connected to the first terminal device via a network and receives information from the first terminal device; and a second terminal device that is connected to the server device via a network and is carried by another user associated with the user, wherein the first terminal device includes a processing unit configured to play a game program for the user and a first communication unit configured to transmit game play information which is play information of the game program in the processing unit to the server device, the server device includes a server receiver unit configured to receive the game play information from the first terminal device, a server determination unit configured to determine a state of the user on the basis of the game play information received by the server receiver unit, and a server transmitter unit configured to transmit state information of the user to the second terminal device on the basis of the state of the user determined by the server determination unit, the second terminal device includes a second communication unit configured to receive the state information of the user from the server device and a display information generating unit configured to generate display information for notifying the other user of the state of the user on the basis of the state information received by the second communication unit, the game program causes the first terminal device to perform: as a first game, a display output control function of displaying a mobile object in a predetermined area of a display screen and displaying a specific object in the predetermined area; and a determination function of determining whether a first signal input by the user has been input when the specific object and the mobile object have a predetermined positional relationship, the display output control function additionally displays an attribute object with attributes in another predetermined area of the display screen, the determination function determines whether a second signal input by the user has been input when the attribute object is displayed in the other predetermined area and has a specific attribute, the attributes include an attribute indicating that an object is actually mobile and an attribute indicating that an object is actually immobile, and the attribute object is an object indicating that the object is actually mobile and/or the object is actually immobile.

The first communication unit may add identification information of the user to the play information of the game program and transmit the play information with the identification information added thereto to the server device.

The display information generating unit may extract user information corresponding to the identification information from a predetermined storage unit and generate display information for notifying of the extracted user information along with the state of the user on the basis of the state information of the user with the identification information added thereto received by the second communication unit.

The play information of the game program may include play start information of the game by the user, and the server determination unit may determine that the state of the user is not good when the play start information is not acquired in a predetermined period.

The play information of the game program may include play end information of the game by the user, and the server determination unit may determine that the state of the user is not good when the play end information is not acquired in a predetermined period.

The first terminal device may further include a storage unit configured to store a play history of the game in correlation with the user, and the game play information may include the play history stored in the storage unit.

A user monitoring method according to the invention is a user monitoring method in a system including: a first terminal device that is provided in a user's home; a server device that is connected to the first terminal device via a network and receives information from the first terminal device; and a second terminal device that is connected to the server device via a network and is carried by another user associated with the user, the user monitoring method causing the first terminal device to perform a processing step of playing a game program for the user and a first communication step of transmitting game play information which is play information of the game program in the processing step to the server device, the user monitoring method causing the server device to perform a server reception step of receiving the game play information from the first terminal device, a server determination step of determining a state of the user on the basis of the game play information received in the server reception step, and a server transmission step of transmitting state information of the user to the second terminal device on the basis of the state of the user determined in the server determination step, wherein the second terminal device is caused to perform a second communication step of receiving the state information of the user from the server device and a display information generating step of generating display information for notifying the other user of the state of the user on the basis of the state information received in the second communication step, the game program causes the first terminal device to perform: as a first game, a display output control step of displaying a mobile object in a predetermined area of a display screen and displaying a specific object in the predetermined area; and a determination step of determining whether a first signal input by the user has been input when the specific object and the mobile object have a predetermined positional relationship, the display output control step includes additionally displaying an attribute object with attributes in another predetermined area of the display screen, the determination step includes additionally determining whether a second signal input by the user has been input when the attribute object is displayed in the other predetermined area and has a specific attribute, the attributes include an attribute indicating that an object is actually mobile and an attribute indicating that an object is actually immobile, and the attribute object is an object indicating that the object is actually mobile and/or the object is actually immobile.

### [Advantageous Effects of Invention]

With the computer program, the server device, the tablet electronic device, and the electronic device for connection to a television set according to the invention, it is possible to improve driving ability of a user who plays a game which is embodied by the invention.

### [Brief Description of Drawings]

FIG. 1 is a diagram illustrating an example in which a user plays a game which is implemented by the invention.
FIG. 2 is a configuration diagram and a flowchart illustrating an example of a function of a first game according to the invention.
FIG. 3 is a conceptual diagram illustrating an example of a display screen of the first game according to the invention.
FIG. 4 is a configuration diagram and a flowchart illustrating an example of functions of a second game according to the invention.
FIG. 5 is a conceptual diagram illustrating an example of a display screen of the second game according to the invention.
FIG. 6 is a configuration diagram and a flowchart illustrating an example of a function of a third game according to the invention.
FIG. 7 is a conceptual diagram illustrating an example of a display screen of the third game according to the invention.
FIG. 8 is a configuration diagram illustrating an example of functions of a server device according to the invention.
FIG. 9 is a diagram illustrating an example of the concept of a monitoring system according to the invention.
FIG. 10 is a configuration diagram illustrating an example of a configuration of the monitoring system according to the invention.
FIG. 11 is a configuration diagram illustrating an example of a data configuration stored in a storage unit according to the invention.

### [Description of Embodiments]

A computer program, a server device, a tablet electronic device, and an electronic device for connection to a television set according to the invention will be described below in detail.

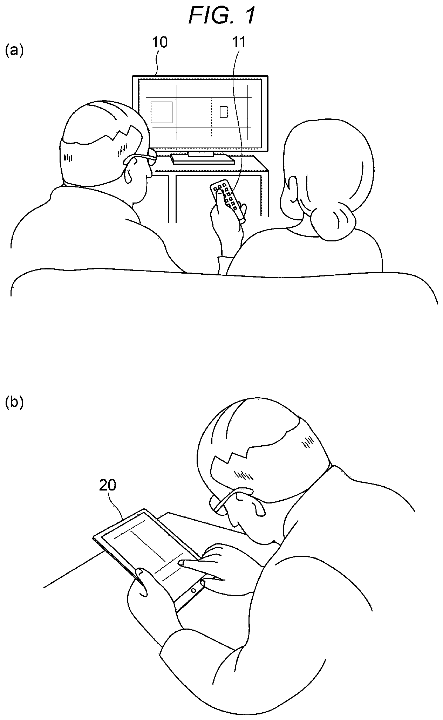

FIGS. 1(a) and 1(b) are conceptual diagrams illustrating an example in which a user plays a game which is implemented by the invention.

FIG. 1(a) illustrates an example in which a user plays the game using a television set 10 connected to a server device which will be described later. In this case, the television set 10 can be connected to a server device via a network in a wired or wireless manner and bidirectionally communicate with the server device. A user can input a signal to the television set 10 using a remote controller 11 which is associated with the television set 10. The television set 10 connected to the server device may be an information processing terminal (a personal computer which is referred to as a "PC" in the following description) which is connected to the server device. The television set may be a stand-alone type PC which is not connected to the server device.

Although not illustrated in the drawing, a user can also play the game using the television set 10 as a display screen and using an electronic device which is connected to the television set 10. In this case, the user can input a signal to the electronic device using a remote controller which is associated with the electronic device.

FIG. 1(b) illustrates an example in which a user plays the game using a tablet electronic device 20 which will be described later. In this case, the user can input a signal to the tablet electronic device 20 by touching a display screen of a touch panel type of the tablet electronic device 20. The tablet electronic device 20 includes a mobile phone with a touch panel (a so-called "smartphone"). Although not illustrated in the drawing, the game according to the invention can also be played using a conventional mobile phone which does not include a touch panel and uses push buttons as input means.

In addition to aged drivers of 70 or more which are defined by the Road Traffic Act, aged persons of 60 or more or 65 or more are supposed as a user who plays the game implemented by the invention, but since the invention is for improvement of driving ability, the target age is not particularly limited.

A game which is played in the above-mentioned circumstances is implemented by a computer program which will be described below in detail.

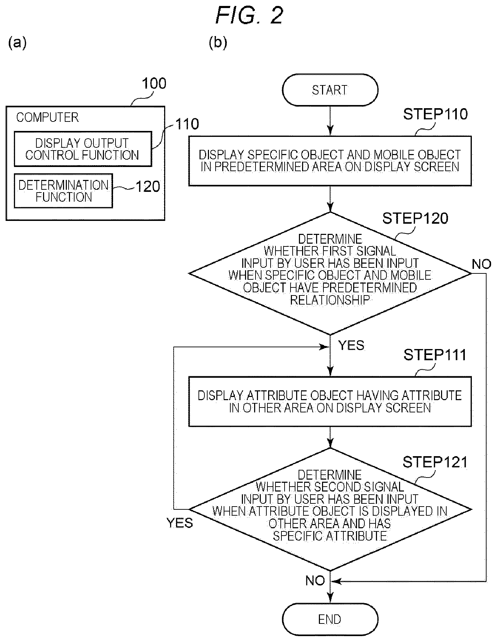

A computer program according to the invention causes a computer 100 to perform a display output control function 110 and a determination function 120 as a first game as illustrated in FIG. 2(a).

Examples of the computer 100 include a television set, an electronic device for connection to a television set, a tablet electronic device, and a server device, but are not particularly limited thereto as long as they can execute the computer program according to the invention.

The display output control function 110 displays a specific object and a mobile object in a predetermined area of a display screen (STEP110 in FIG. 2(b)).

It is preferable that the predetermined area of the display screen be, for example, within the central visual field of a user and it is specifically more preferable that the predetermined area is a viewing angle range of 5 degrees.

The specific object is an object having a predetermined shape. This specific object can be set to be immovable in the display screen, but may be set to be movable on a predetermined route which will be described later in order to increase difficulty of the game.

The predetermined shape of the specific object may be a ring shape, a triangular shape, a rectangular shape, or a star shape, but is not particularly limited thereto. It is preferable that the predetermined shape be a shape which is distinguishable from the mobile object.

The mobile object is an object having a predetermined shape and can be set to be movable on a predetermined route in the display screen. This route may be set to, for example, on a circumference of a circle centered on the center of the display screen and the specific object may also be set to be displayed on the circumference of the circle. Whether the route is actually displayed on the display screen is not particularly limited.

The predetermined shape of the mobile object may be a ring shape, a triangular shape, a rectangular shape, or a star shape, but is not particularly limited thereto. It is preferable that the predetermined shape be a shape which is distinguishable from the specific object.

The determination function 120 determines whether a first signal input by a user has been input when the specific object and the mobile object have a predetermined positional relationship (STEP120 in FIG. 2(b)). The determination result is a correct answer when it is determined that the first signal has been input at that time, and the determination result is an incorrect answer when it is determined that the first signal has not been input at that time. The game may be ended as this result of determination, or the game may be continued regardless of this result of determination.

As illustrated in FIGS. 1(a) and 1(b), the first signal can be input by allowing a user to perform an operation of pressing a button of the remote controller 11 which is associated with the television set 10 or an operation of touching a display screen of a touch panel type of the tablet electronic device 20. The first signal may be input through an operation of clicking a mouse connected to a PC when the game is played using the PC, and the first signal may be input through a button pressing operation when the game is played using a mobile phone not including a touch panel. This input method can be applied to other inputs which will be described later.

The predetermined positional relationship can include all positional relationships from a position at which the mobile object starts overlapping the specific object to a position at which the mobile object does not overlap the specific object. This positional relationship can be appropriately set depending on the difficulty of the game by narrowing or expanding.

Then, the display output control function 110 additionally displays an attribute object having an attribute in another predetermined area of the display screen (STEP 111 in FIG. 2(b)).

The attribute object is an object having a predetermined shape and may be set to be immovable in the display screen. The predetermined shape may be set to, for example, a shape indicating a mobile object such as a person or a bicycle or a shape indicating an immobile object such as a wastebasket or a utility pole, which are encountered when a person actually drives an automobile on a road.

For example, the attributes may be set to two types of "mobile/immobile" or "animate/inanimate," or may be set to three or more types including other attributes. The types and the number of attributes can be appropriately set depending on difficulty of the game.

Another predetermined area of the display screen is an area other than the predetermined area. For example, when the predetermined area is set to a central area of the display screen, the other predetermined area can be set to four corner areas of the display screen. The other predetermined area may be an area outside a predetermined route on which the mobile object moves or may be an area inside the predetermined route. Attention should be paid to a broader range of the display screen to increase the difficulty by setting the other predetermined area to the outside area, and the difficulty may be decreased by setting the other predetermined area to the inside area. The attribute object may be displayed as the specific object and the mobile object.

Then, the determination function 120 determines whether a second signal input by the user has been input when the attribute object has a specific attribute (STEP 121 in FIG. 2(b)). The determination result is a correct answer when it is determined that the second signal has been input at that time, and the determination result is an incorrect answer when it is determined that the second signal has not been input at that time.

Similar to the first signal, the second signal can be input by allowing the user to press a button of the remote controller which is associated with the television set or to touch a display screen of a touch panel type of the tablet electronic device, and the second signal can be preferably input in a mode which can be distinguished from the first signal. For example, when the first signal is input through an operation of pressing a button A of the remote controller or an operation of touching an icon A of the tablet electronic device, the second signal may be input through an operation of pressing a button B instead of the button A of the remote controller or an operation of touching an icon B instead of the icon A of the tablet electronic device. In consideration of a case in which the first signal and the second signal are simultaneously input, the icons and the buttons may be preferably disposed such that the signals can be independently input with the right hand and the left hand.

The specific attribute can be preset out of the above-mentioned attributes. For example, when the attributes are two types of "mobile/immobile," the specific attribute can be set to "mobile."

With the game which is implemented by the computer program having the above-mentioned configuration, it is possible to improve driving ability of a user who has played the game. Particularly, with the first game, a user can receive training of causing the user to react appropriately to (training for quickly sensing a danger) a target appearing in an area which is not watched by the user during work in an area which is watched (for example, a target appearing in a peripheral visual field during work in the central visual field), and it is thus possible to improve dual attention of the user. The improvement of dual attention of a user improves the user's ability of quickly sensing a child who appears suddenly laterally and operating a brake or the like, for example, when the user watches the center of a road during driving an automobile.

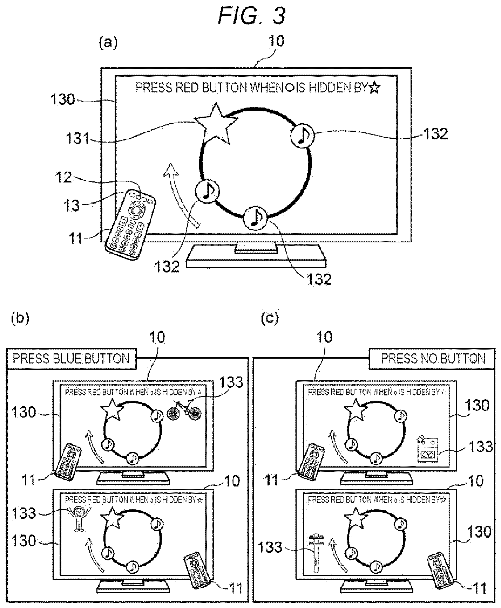

FIGS. 3(a) to 3(c) illustrate examples in which a display screen 130 of the first game of the invention is displayed on the television set 10. On the display screen 130 illustrated in FIG. 3(a), a star-shaped specific object 131 and ring-shaped mobile objects 132 are displayed in the central area. A user who watches the display screen 130 performs an operation of pressing a red button 12 of a remote controller 11 when the user determines that one mobile object 132 overlaps a position of the specific object 131. For example, various incentives such as playing a piece of music which will be described later may be provided depending on whether the time of this operation is appropriate. The difficulty of the first game can be adjusted by increasing the number of specific objects 131 or changing speeds of the mobile objects 132. When no color is applied to buttons of the corresponding remote controller such as when an electronic device for connection to a television set is used, the game can be played using a corresponding designated button.

On the display screens 130 illustrated in FIGS. 3(b) and 3(c), an attribute object 133 such as a bicycle, a person, a wastebasket, or a utility pole is additionally displayed in the peripheral area. A user who watches the display screen 130 performs an operation of pressing a blue button 13 of the remote controller 11 when the user determines that the attribute object 133 is mobile, in addition to the above-mentioned operation. Similarly, a user does not perform any operation when the user determined that the attribute object 133 is immobile. In addition to the above-mentioned incentives, an additional incentive such as turning on a light or playing sound for adding an interlude to the piece of music may be given depending on whether the time of the operation is appropriate.

Although not illustrated in the drawings, a residual time display portion in which a residual time to end of the game is displayed and a score display portion in which scores based on a correct answer rate of the game is displayed may be displayed on the display screen 130.

The computer program according to the invention may cause right and left sound output units of a computer to output sound when the attribute object is displayed on the display screen. For example, when an attribute object is displayed on a right-upper side on the display screen and sound is output from the sound output unit which is on the left toward the display screen, a user is likely to be preoccupied with the sound from the left and to pay no attention to the display on the right-upper side. By performing training in this state, it is possible to further improve dual attention.

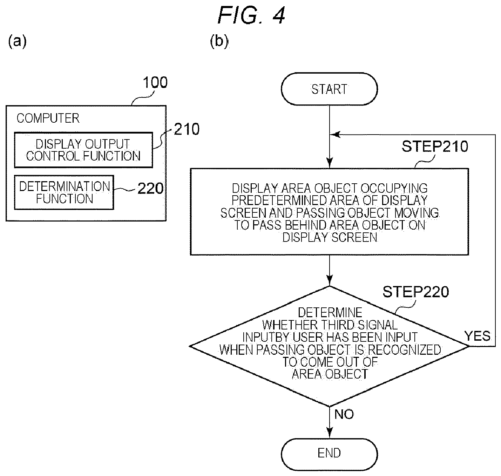

Subsequently, as illustrated in FIG. 4, the computer program according to the invention causes the computer 100 to perform a display output control function 210 and a determination function 220 as a second game.

The display output control function 210 displays an area object which occupies a predetermined area in the display screen and a passing object which moves to pass behind the area object on the display screen (STEP210 in FIG. 4(b)).

Examples of a display method of displaying the passing object to move to pass behind the area object include a method of displaying the area object and the passing object in different layers and causing the passing object to pass behind the area object and a method of displaying the objects in the same layer such that the passing object seems to pass behind the area object, but are not particularly limited thereto.

The area object is an object which occupies a predetermined area in the display screen and has a predetermined shape. This specific object may be set not to move in the display screen and have such a size that the passing object which will be described later can be completely hidden behind the area object. As this size increases, the difficulty of the game increases.

The passing object is an object which has a predetermined shape and moves along a predetermined route in the display screen. For example, this route can extend from left to right on the display screen and may be a linear or zigzag route.

The determination function 220 determines whether a third signal input at a predetermined time by a user has been input when the passing object is recognized to out of the area object (STEP220 in FIG. 4(b)), the determination result is a correct answer when it is determined that the third signal has been input at that time, and the determination result is an incorrect answer when it is determined that the third signal has not been input at that time.

The case in which the passing object is recognized to come out of the area object can include all cases from a case in which the passing object hidden by the area object starts coming out of the area object to a case in which the passing object comes out of the area object completely. These conditions can be appropriately set depending on the difficulty of the game.

Similar to the first signal and the second signal, the third signal can be input by allowing a user to perform an operation of pressing a button of a remote controller which is associated with a television set or an operation of touching a display screen of a touch panel type of the tablet electronic device.

With the game which is implemented by the computer program having the above-mentioned configuration, it is possible to improve driving ability of a user who plays the game. Particularly, it is possible to perform training for predicting what will happen in a relatively short future by observing an event (training for enhancing danger sensing ability of a user) and to improve prediction ability of the user. That is, the improvement of the prediction ability of a user improves, for example, the user's ability of reaction to sudden dashing-out, reaction to a vehicle which enters suddenly from right or left, reaction to a vehicle which overtakes suddenly, reaction to a person or a vehicle coming out of a blind area, and the like while the user is driving an automobile.

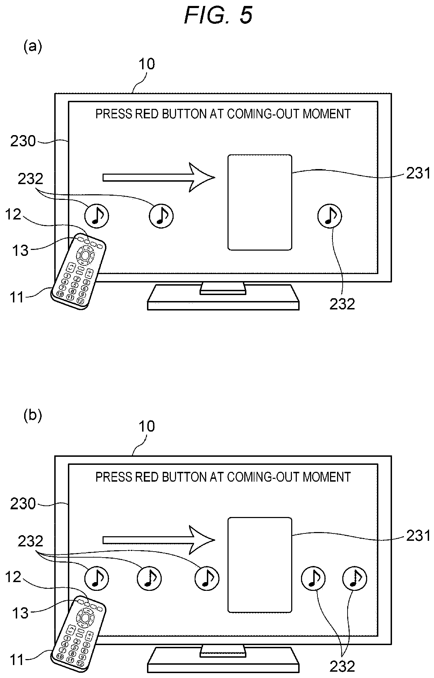

FIGS. 5(a) and 5(b) illustrate examples in which a display screen 230 of a second game in the invention is displayed on the television set 10. A rectangular area object 231 and ring-shaped passing objects 232 are displayed on the display screen 230 illustrated in FIG. 5(a). A user who watches the display screen 230 performs an operation of pressing a red button 12 of a remote controller 11 when the user determines that one passing object 232 comes out of the area object 231. For example, various incentives such as playing a piece of music which will be described later may be provided depending on whether the time of this operation is appropriate. As illustrated in FIG. 5(b), the difficulty of the first game can be adjusted by displaying a plurality of passing objects 232 which have different speeds by colors, or the like. At this time, one passing object 232 does not overtake a preceding passing object 232.

Whether a user should input a third signal may be classified by colors of the passing objects. For example, the determination result may be a correct answer when it is determined that a user has input the third signal when a passing object with color A is recognized to come out of the area object, and the determination result may be an incorrect answer when it is determined that the user has input the third signal when a passing object with color B is recognized to come out of the area object. When it is determined that the user has "not input" the third signal when a passing object with color B is recognized to come out of the area object, the determination result is a correct answer. Accordingly, it is possible to increase the difficulty of the game.

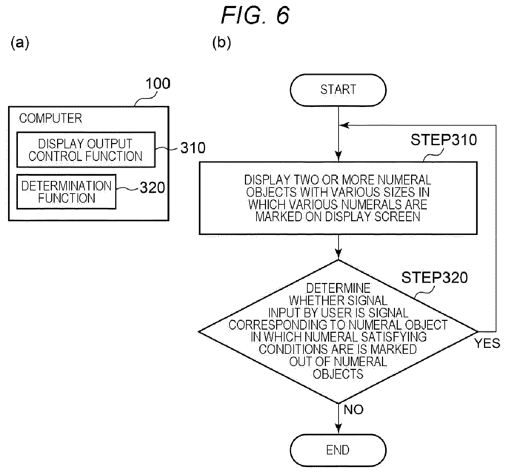

Subsequently, as illustrated in FIG. 6, the computer program according to the invention causes the computer 100 to perform a display output control function 310 and a determination function 320 as a third game.

The display output control function 310 displays a plurality of numeral objects with various sizes in which various numerals are marked on the display screen (STEP310 in FIG. 6(b)).

The determination function 320 determines whether a signal input by a user is a signal corresponding to a numeral object in which a numeral satisfying a condition is marked out of the numeral objects. Examples of the condition include "larger" and "smaller" and the determination function 320 determines whether a signal corresponding to the magnitude of the marked numeral instead of the size of the numeral object has been input (STEP320 in FIG. 6(b)). At this time, it is desirable in view of training that the magnitudes of the numerals do not match the sizes of the objects.

Similar to the above-mentioned first signal and the like, the signal can be input by allowing a user to perform an operation of pressing a button of a remote controller which is associated with a television set or an operation of touching a display screen of a touch panel type of the tablet electronic device.

With the game which is implemented by the computer program having the above-mentioned configuration, it is possible to improve driving ability of a user who plays the game. Particularly, it is possible to perform training for performing certain work as quickly as possible (training for quickly performing an avoidance operation) and to improve cognitive speed and ability of the user. That is, the improvement of the cognitive speed and ability of a user improves, for example, the user's ability of reaction to sudden dashing-out, reaction to a vehicle which enters suddenly from right or left, reaction to a vehicle which overtakes suddenly, reaction to a person or a vehicle coming out of a blind area, and the like while the user is driving an automobile.

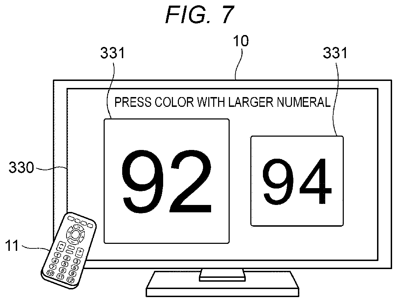

FIG. 7 illustrates an example in which a display screen 330 of the third game according to the invention is displayed on the television set 10. Two types of large and small rectangular numeral objects 331 are displayed on the display screen 330 illustrated in FIG. 7. A user who watches the display screen 330 is caused to perform an operation of pressing a button of the remote controller 11 with a color corresponding to the numeral object with the larger numeral out of the displayed numerals. In this example, the user is caused to perform an operation of pressing a button with a color corresponding to the numeral object with a numeral of 94 marked therein. A user may be caused to perform an operation of pressing a button of the remote controller 11 with a color corresponding to the numeral object with the smaller numeral out of the displayed numerals. When the same numerals are displayed, a user may be caused not to press any button of the remote controller 11 or to perform an operation of pressing a predetermined button. Accordingly, it is possible to enhance the difficulty of the game. In the third game, the above-mentioned process may be implemented through an operation of touching an icon using a tablet electronic device 20.

The computer program according to the invention may additionally provide the computer 100 with a game of causing a user to input a total sum of numerals which are marked in a plurality of numeral objects displayed on the display screen as the third game. This input may be to select an answer out of numerals displayed as candidates for the answer on the display screen or to cause the user to input an answer using numeral buttons of the remote controller. With this configuration, it is possible to prevent a user from departure from the game due to weariness.

It is preferable that the computer program according to the invention cause the computer to additionally perform a music play control function of playing a predetermined piece of music on the basis of a result of determination from the determination function. The piece of music may be a piece of vocal music with lyrics such as a Japanese ballad or a popular song or may be a piece of instrumental music without lyrics according to the taste of an aged person which is supposed as a user. With this music play control function, it is possible to improve a user's motivation to play the game and to enable the user to continuously receive the training.

Difficulties of the first to third games can be adjusted by providing a time limit. The time limit is not for counting the game over but for determining a play time of the game which is required for an effect of the invention. For example, when consecutive execution of each game in one minute every day is advantageous for achieving the effect of the invention, it is preferable that the time be set as the time limit.

In the games according to the invention, it is possible to provide training which is suitable for a user's ability by setting a predetermined score which is to be acquired in each game step by step and leveling up/down to adjust the difficulty of the game when a score acquired by the user is greater/less than the predetermined score.

In the games according to the invention, a score may be displayed at the time of end of each game and an age corresponding to the score may be displayed. With this display, a user can ascertain what age the user's ability corresponds to and it is thus possible to improve the will to receive training.

The computer program according to the invention may cause the computer to additionally perform a storage function of storing a play history of a game in a predetermined storage unit in correlation with a user and an extraction function of extracting a game which is suitable for improving the user's driving ability on the basis of the play history of the game stored in correlation with the user.

The play history may include a play record of a game and the extraction function may extract a game of which the play record is less than a predetermined criterion. Accordingly, it is possible to preferentially improve a user's ability which is to be improved. The extraction function may be caused to operate only when the play history corresponding to a predetermined number of times is stored. Accordingly, it is possible to enhance accuracy. The predetermined storage unit may be provided in the computer or may be provided in an external device connected to the computer.

The computer program according to the invention may cause the computer to additionally perform a voice output control function of outputting voice for assisting play of a game in response to a request from a user. Voice for assisting play of a game has details for easy understanding of rules of the game and examples thereof include voice such as "Press a button with a color of a larger numeral!" and "Do your best!" Accordingly, it is possible to cause an aged person who is supposed as a user to continuously play a game without giving up the game.

The computer program according to the invention may cause the computer to additionally perform a notification information generating function of generating notification information which is to notify a predetermined specific device of a play history of a game stored in correlation with a user.

The play history includes a play state indicating whether a user has played the game. The play state may be stored on the basis of a connection state of an electronic device for connection to a television set or an access state to a server device which will be described later. The predetermined specific device may be notified of the connection state or the access state itself.

Regarding the notification information, when it is determined that a user has not played a game in a predetermined period on the basis of the play state, the notification information may be generated. The predetermined period can be appropriately set to, for example, a unit such as two days or one week.

The specific device may be a PC, a smartphone, a mobile phone, or other communication terminal which is carried by various persons who can communicate with a user directly or over a phone such as an insurance company, a security company, a food distribution company, or a sports facility for aged persons in addition to friends, relatives, and the like of the user.

A friend or relative of a user or a security company having received such notification information can sensitively ascertain a contingency of the user by confirming the user's safety through a phone or direct visit of the user. An insurance company can present insurance details corresponding to the user's ability by confirming the insurance details on the basis of the play history. A food distribution company, a sports facility for aged persons, or the like are supposed to be located in the vicinity of the user's residence and thus can take measures of direct visiting the user, or the like, like the security company.

Accordingly, with the above-mentioned configuration, it is possible to implement a user monitoring service in addition to improvement a user's driving ability.

The electronic device for connection to a television set may be a device which is called a protection dongle. With this electronic device, it is possible to manage misuse of a game which is implemented in the invention and to ascertain a play state on the basis of a connection state of the device.

The computer program according to the invention may be stored in a recording medium which can be read by a processor, and a "non-transitory physical medium" such as a tape, a disk, a card, a semiconductor memory, or a programmable logic circuit can be used as the recording medium.

The computer program can be mounted, for example, using a script language such as ActionScript or JavaScript (registered trademark), an object-oriented programming language such as Objective-C or Java (registered trademark), or a markup language such as HTML5.

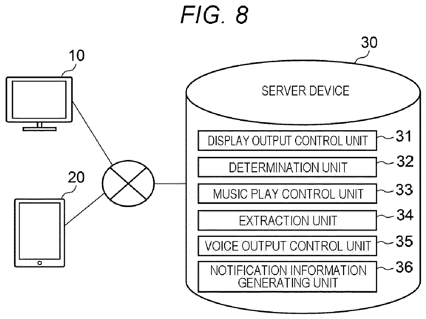

The server device according to the invention will be described below. FIG. 8 is a configuration diagram illustrating an example of a configuration of a server device according to the invention.

As illustrated in FIG. 8, a server device 30 according to the invention can be connected to a television set 10 or a tablet electronic device 20 via a network. The server device 30 according to the invention includes a display output control unit 31 and a determination unit 32.

The display output control unit 31 displays a specific object and a mobile object in a predetermined area of a display screen. Details of the function of the display output control unit 31 are the same as the display output control function 110.

The determination unit 32 determines whether a first signal input at a predetermined time by a user has been input when the specific object and the mobile object have a predetermined positional relationship. Details of the function of the determination unit 32 are the same as the determination function 120.

The display output control unit 31 additionally displays an attribute object having an attribute in another predetermined area of the display screen, and the determination unit 32 determines whether a second signal input by the user has been input when the attribute object has a specific attribute.

With the game which is implemented by the server device 30 having the above-mentioned configuration, it is possible to improve driving ability of a user who has played the game. Particularly, with the first game, a user can receive training of causing the user to react appropriately to (training for quickly sensing a danger) a target appearing in an area which is not watched by the user during work in an area which is watched (for example, a target appearing in a peripheral visual field during work in the central visual field), and it is thus possible to improve dual attention of the user.

The server device 30 according to the invention may further include a music play control unit 33, an extraction unit 34, a voice output control unit 35, and/or a notification information generating unit 36. Details of these elements are the same as the music play control function, the extraction function, the voice output control function, and the notification information generating function, which have been described above.

A tablet electronic device according to the invention will be described below. The tablet electronic device according to the invention includes a display screen, a display output control unit, and a determination unit.

The display screen may employ a touch panel type in order to facilitate a user's input operation.

The display output control unit displays a specific object and a mobile object in a predetermined area of the display screen. Details of the function of the display output control unit are the same as the display output control function 110.

The determination unit determines whether a first signal input by a user has been input when the specific object and the mobile object have a predetermined positional relationship. Details of the function of the determination unit are the same as the determination function 120.

The display output control unit additionally displays an attribute object having an attribute in another predetermined area of the display screen, and the determination unit additionally determines whether a second signal input at a predetermined time by the user has been input when the attribute object has a specific attribute.

With the game which is implemented by the tablet electronic device having the above-mentioned configuration, it is possible to improve driving ability of a user who has played the game. Particularly, with the first game, a user can receive training of causing the user to react appropriately to (training for quickly sensing a danger) a target appearing in an area which is not watched by the user during work in an area which is watched (for example, a target appearing in a peripheral visual field during work in the central visual field), and it is thus possible to improve dual attention of the user.

An electronic device for connection to a television set which has been exemplified above as the computer that executes the program according to the invention includes a connection terminal for connection a television set, a display output control unit that displays a specific object and a mobile object in a predetermined area of a display screen of the television set, and a determination unit that determines whether a first signal input by a user has been input when the specific object and the mobile object have a predetermined positional relationship, wherein the display output control unit additionally displays an attribute object having an attribute in another predetermined area of the display screen, and the determination unit determines whether a second signal input by the user has been input when the attribute object is displayed in the another predetermined area and has a specific attribute.

The electronic device for connection to a television set is an electronic device that can be connected to a television set and is not particularly limited as long as it includes a processing unit that can execute the computer program according to the invention. For example, a set-top box or stick PC can be employed. Examples of the connection terminal include a USB terminal or an HDMI (registered trademark) terminal, but are not limited thereto.

With the game which is implemented by the electronic device for connection to a television set having the above-mentioned configuration, it is possible to improve driving ability of a user who has played the game. Particularly, with the first game, a user can receive training of causing the user to react appropriately to (training for quickly sensing a danger) a target appearing in an area which is not watched by the user during work in an area which is watched (for example, a target appearing in a peripheral visual field during work in the central visual field), and it is thus possible to improve dual attention of the user.

A user may play a game according to the invention on a large screen of a television set by causing a tablet electronic device carried by the user to perform the game according to the invention and displaying the display screen of the tablet electronic device on the television device without any change. Examples of the display method include a method of connecting the tablet electronic device to the television set in a wired manner and a method of directly or indirectly connecting the tablet electronic device to the television set in a wireless manner.

A user monitoring system and a user monitoring method according to the invention will be described below in detail.

Details of a monitoring system according to the invention will be described below with reference to an accompanied drawing.

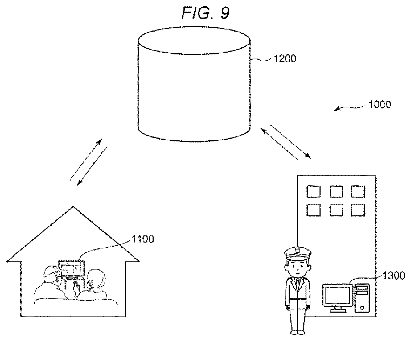

FIG. 9 is a diagram illustrating an example of the concept of the monitoring system according to the invention. As illustrated in FIG. 9, the monitoring system 1000 according to the invention includes a first terminal device 1100 that is provided in a user's home, a server device 1200 that is connected to the first terminal device 1100 via a network and receives information from the first terminal device 1100, and a second terminal device 1300 that is connected to the server device 1200 via a network and is carried by another user associated with the user.

A user's home is, for example, the user's location and is not particularly limited as long as it is a place in which the user can operate the first terminal device 1100. The first terminal device 1100 is not limited to a stationary terminal device but includes a portable terminal.

Another user associated with the user may be various persons who can communicate with the user directly or over a phone such as a security company, an insurance company, a food distribution company, or a sports facility for aged persons in addition to friends, relatives, and the like of the user.

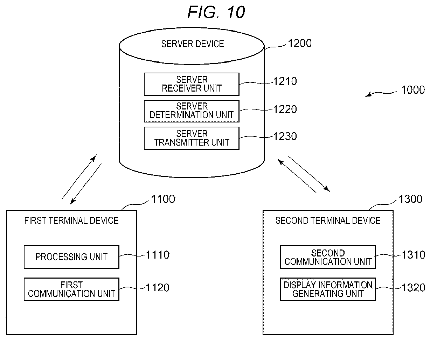

FIG. 10 is a diagram illustrating an example of a configuration of the monitoring system according to the invention. As illustrated in FIG. 10, the first terminal device 1100 includes a processing unit 1110 and a first communication unit 1120.

The processing unit 1110 can execute a game program for a user.

The game program for a user may be, for example, a game program of a game which is designed to improvement of a user's ability which will be described later, but is not limited thereto and may be a game program for implementing various games. In order to more advantageously achieve the effects of the invention, it is preferable that a game which is implemented by the game program be to be played by a user every day.

The first communication unit 1120 transmits game play information which is execution information of a game program in the processing unit 1110 to the server device 1200.

The game play information includes at least information indicating that a user plays the game or does not play the game. The game play information may include play start information of the game by a user, play end information of the game by a user, and/or a play history. These will be described later.

The server device 1200 includes a server receiver unit 1210, a server determination unit 1220, and a server transmitter unit 1230.

The server receiver unit 1210 receives the game play information from the first terminal device 1100.

The server determination unit 1220 determines a state of a user on the basis of the game play information received by the server receiver unit 1210.

In determining a state of a user, for example, when the game play information is information indicating that the user plays the game/does not play the game, it can be determined that the user can play the game/cannot play the game. When the game play information is play start information of the game by the user and the play start information is not acquired in a predetermined period, it can be determined that the state of the user is not good. When the game play information is play end information of the game by the user and the play end information is not acquired in a predetermined period, it can be determined that the state of the user is not good. In this way, a specific example for determining the state of a user has been described above, but is not limited thereto and various states of a user can be determined with the user monitoring system according to the invention.

The server transmitter unit 1230 transmits state information of a user to the second terminal device 1300 on the basis of the state of the user determined by the server determination unit 1220.

The second terminal device 1300 includes a second communication unit 1310 and a display information generating unit 1320.

The second communication unit 1310 receives state information of a user from the server device 1200.

The display information generating unit 1320 generates display information for notifying another user of a state of a user on the basis of the state information received by the second communication unit 1310.

The display information includes information of a user name and a state of a user. When the server determination unit determines that the state of a user is a state requiring urgency, the second terminal device 1300 emits sound to give an alarm, blows a siren which is separately provided, or the like to call another user's attention.

In determining a state requiring urgency, for example, when game play information is play start information of a game by a user and the play start information is not acquired in a predetermined period, it can be determined that the state of a user is a state requiring urgency. The predetermined period is longer than the predetermined period for determining the state of the user and, for example, when the predetermined period for determining the state of the user is one day, the predetermined period for determining the state requiring urgency can be set to one week or the like.

Another user having recognized such notification can sensitively ascertain a contingency of a user by confirming the user's safety through a phone or direct visit of the user. A security company, a food distribution company, a sports facility for aged persons, or the like is supposed to be located in the vicinity of a residence of a user and thus can rapidly take measures of direct visit or the like.

The first communication unit 1120 can add a user's identification information to play information of a game program and transmit the play information with the identification information added thereto to the server device 1200.

Identification information refers to information for identifying a user and examples thereof is a user ID or a name of the user, but are not particularly limited thereto.

The display information generating unit 1320 can extract user information corresponding to a user's identification information from a predetermined storage unit on the basis of the state information of the user with the identification information added thereto which is received by the second communication unit 1310, and generate display information for notifying of the user information along with the state of the user.

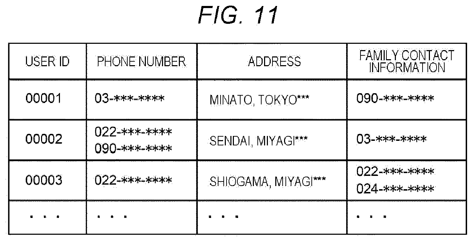

User information means information of a user and includes, for example, contact information of the user (a phone number, an address, and the like) and contact information of family members as illustrated in FIG. 11, but is not particularly limited thereto.

The predetermined storage unit may be provided in the second terminal device 1300 or may be provided in an independent external server device.

Play information of a game program includes play start information of a game by a user, and the server determination unit 1220 can determine that the state of the user is not good when the play start information is not acquired in a predetermined period.

Play information of a game program includes play end information of a game by a user, and the server determination unit 1220 can determine that the state of the user is not good when the play end information is not acquired in a predetermined period.

The first terminal device 1100 further includes a storage unit. The storage unit stores a play history of a game in correlation with a user.

The game play information includes a play history stored in the storage unit. Details of the play history are the same as described above.

When a play history is included in the game play information, for example, an insurance company which is another user can present insurance details based on a user's ability by reviewing insurance details on the basis of the play history.

It is preferable that a game which is implemented by the game program according to the invention be a game for improving cognitive ability of a user.

This game may be the first game, the second game, and/or the third game. A game program for implementing these games may be the above-mentioned computer program according to the invention.

An example of a representative embodiment has been described above, but the invention is not limited to the embodiment.

### [Reference Signs List]

10 Television set
11 Remote controller
12 Red button
13 Blue button
20 Tablet electronic device
30 Server device
31 Display output control unit
32 Determination unit
33 Music play control unit
34 Extraction unit
35 Voice output control unit
36 Notification information generating unit
100 Computer
110 Display output control function
120 Determination function
130 Display screen
131 Specific object
132 Mobile object
133 Attribute object
210 Display output control function
220 Determination function
230 Display screen
231 Area object
232 Passing object
310 Display output control function
320 Determination function
330 Display screen
331 Numeral object
1000 Monitoring system
1100 First terminal device
1110 Processing unit
1120 First communication unit
1200 Server device
1210 Server receiver unit
1220 Server determination unit
1230 Server transmitter unit
1300 Second terminal device
1310 Second communication unit
1320 Display information generating unit

## Claims

1. A computer program causing a computer to perform: as a first game,
a display output control function of displaying a mobile object in a predetermined area of a display screen and displaying a specific object in the predetermined area; and
a determination function of determining whether a first signal input by a user has been input when the specific object and the mobile object have a predetermined positional relationship,
wherein the display output control function additionally displays an attribute object with attributes in another predetermined area of the display screen,
wherein the determination function determines whether a second signal input by the user has been input when the attribute object is displayed in the other predetermined area and has a specific attribute,
wherein the attributes include an attribute indicating that an object is actually mobile and an attribute indicating that an object is actually immobile, and
wherein the attribute object is an object indicating that the object is actually mobile and/or the object is actually immobile.

2. The computer program according to claim 1, wherein the determination function additionally determines whether the second signal input by the user has been input when the attribute object is displayed in the other predetermined area and the specific attribute is an attribute indicating that an object is actually mobile.

3. The computer program according to claim 1 or 2, causing the computer to additionally perform a voice output control function of outputting voice for assisting with play of the first game in response to the user's request.

4. The computer program according to any one of claims 1 to 3, causing the computer to additionally perform:
a storage function of storing a play history of the first game in a predetermined storage unit in correlation with the user; and
a notification information generating function of generating notification information for notifying a predetermined specific device of the play history of the first game stored in correlation with the user.

5. The computer program according to any one of claims 1 to 4, causing the second computer to perform: as a second game,
a display output control function of displaying an area object which occupies a predetermined area of the display screen and a passing object which is displayed to pass behind the area object on the display screen; and
a determination function of determining whether a third signal input by the user has been input when the passing object is recognized to come out of the area object,
the computer program causing the computer to perform: as a third game,
a display output control function of displaying a plurality of numeral objects with various sizes in which various numerals are marked on the display screen; and
a determination function of determining whether a signal input by the user is a signal corresponding to a numeral object in which a numeral satisfying conditions is marked out of the numeral objects,
the computer program causing the computer to additionally perform:
a storage function of storing play histories of the first game, the second game, and the third game in a predetermined storage unit in correlation with the user; and
an extraction function of extracting one game which is suitable for improving the user's driving ability out of the first game, the second game, and the third game on the basis of the play histories.

6. The computer program according to any one of claims 1 to 5, causing the computer to additionally perform a music play control function of playing a predetermined piece of music on the basis of a result of determination from the determination function.

7. A server device comprising:
a display output control unit configured to display a mobile object in a predetermined area of a display screen and displaying a specific object in the predetermined area; and
a determination unit configured to determine whether a first signal input by a user has been input when the specific object and the mobile object have a predetermined positional relationship,
wherein the display output control unit additionally displays an attribute object with attributes in another predetermined area of the display screen,
wherein the determination unit determines whether a second signal input by the user has been input when the attribute object is displayed in the other predetermined area and has a specific attribute,
wherein the attributes include an attribute indicating that an object is actually mobile and an attribute indicating that an object is actually immobile, and
wherein the attribute object is an object indicating that the object is actually mobile and/or the object is actually immobile.

8. A tablet electronic device comprising:
a display screen of a touch panel type;
a display output control unit configured to display a mobile object in a predetermined area of a display screen and displaying a specific object in the predetermined area; and
a determination unit configured to determine whether a first signal input by a user has been input when the specific object and the mobile object have a predetermined positional relationship,
wherein the display output control unit additionally displays an attribute object with attributes in another predetermined area of the display screen,
wherein the determination unit determines whether a second signal input by the user has been input when the attribute object is displayed in the other predetermined area and has a specific attribute,
wherein the attributes include an attribute indicating that an object is actually mobile and an attribute indicating that an object is actually immobile, and
wherein the attribute object is an object indicating that the object is actually mobile and/or the object is actually immobile.

9. An electronic device for connection to a television set comprising:
a connection terminal for connection to a television set;
a display output control unit configured to display a mobile object in a predetermined area of a display screen and displaying a specific object in the predetermined area; and
a determination unit configured to determine whether a first signal input by a user has been input when the specific object and the mobile object have a predetermined positional relationship,
wherein the display output control unit additionally displays an attribute object with attributes in another predetermined area of the display screen,
wherein the determination unit determines whether a second signal input by the user has been input when the attribute object is displayed in the other predetermined area and has a specific attribute,
wherein the attributes include an attribute indicating that an object is actually mobile and an attribute indicating that an object is actually immobile, and
wherein the attribute object is an object indicating that the object is actually mobile and/or the object is actually immobile.

10. A user monitoring system comprising:
a first terminal device that is provided in a user's home;
a server device that is connected to the first terminal device via a network and receives information from the first terminal device; and
a second terminal device that is connected to the server device via a network and is carried by another user associated with the user,
wherein the first terminal device includes
a processing unit configured to play a game program for the user, and
a first communication unit configured to transmit game play information which is play information of the game program in the processing unit to the server device,
wherein the server device includes
a server receiver unit configured to receive the game play information from the first terminal device,
a server determination unit configured to determine a state of the user on the basis of the game play information received by the server receiver unit, and
a server transmitter unit configured to transmit state information of the user to the second terminal device on the basis of the state of the user determined by the server determination unit,
wherein the second terminal device includes
a second communication unit configured to receive the state information of the user from the server device, and
a display information generating unit configured to generate display information for notifying the other user of the state of the user on the basis of the state information received by the second communication unit,
wherein the game program causes the first terminal device to perform: as a first game,
a display output control function of displaying a mobile object in a predetermined area of a display screen and displaying a specific object in the predetermined area; and
a determination function of determining whether a first signal input by the user has been input when the specific object and the mobile object have a predetermined positional relationship,
wherein the display output control function additionally displays an attribute object with attributes in another predetermined area of the display screen,
wherein the determination function determines whether a second signal input by the user has been input when the attribute object is displayed in the other predetermined area and has a specific attribute,
wherein the attributes include an attribute indicating that an object is actually mobile and an attribute indicating that an object is actually immobile, and
wherein the attribute object is an object indicating that the object is actually mobile and/or the object is actually immobile.

11. The user monitoring system according to claim 10, wherein the first communication unit adds identification information of the user to the play information of the game program and transmits the play information with the identification information added thereto to the server device.

12. The user monitoring system according to claim 11, wherein the display information generating unit extracts user information corresponding to the identification information from a predetermined storage unit and generates display information for notifying of the extracted user information along with the state of the user on the basis of the state information of the user with the identification information added thereto received by the second communication unit.

13. The user monitoring system according to any one of claims 10 to 12, wherein the play information of the game program includes play start information of the game by the user, and
wherein the server determination unit determines that the state of the user is not good when the play start information is not acquired in a predetermined period.

14. The user monitoring system according to any one of claims 10 to 13, wherein the play information of the game program includes play end information of the game by the user, and
wherein the server determination unit determines that the state of the user is not good when the play end information is not acquired in a predetermined period.

15. The user monitoring system according to any one of claims 10 to 14, wherein the first terminal device further includes a storage unit configured to store a play history of the game in correlation with the user, and
wherein the game play information includes the play history stored in the storage unit.

16. A user monitoring method in a system including:
a first terminal device that is provided in a user's home;
a server device that is connected to the first terminal device via a network and receives information from the first terminal device; and
a second terminal device that is connected to the server device via a network and is carried by another user associated with the user,
the user monitoring method causing the first terminal device to perform
a processing step of playing a game program for the user, and
a first communication step of transmitting game play information which is play information of the game program in the processing step to the server device,
the user monitoring method causing the server device to perform
a server reception step of receiving the game play information from the first terminal device,
a server determination step of determining a state of the user on the basis of the game play information received in the server reception step, and
a server transmission step of transmitting state information of the user to the second terminal device on the basis of the state of the user determined in the server determination step,
wherein the second terminal device is caused to perform
a second communication step of receiving the state information of the user from the server device, and
a display information generating step of generating display information for notifying the other user of the state of the user on the basis of the state information received in the second communication step,
wherein the game program causes the first terminal device to perform: as a first game,
a display output control step of displaying a mobile object in a predetermined area of a display screen and displaying a specific object in the predetermined area; and
a determination step of determining whether a first signal input by the user has been input when the specific object and the mobile object have a predetermined positional relationship,
wherein the display output control step includes additionally displaying an attribute object with attributes in another predetermined area of the display screen,
wherein the determination step includes additionally determining whether a second signal input by the user has been input when the attribute object is displayed in the other predetermined area and has a specific attribute,
wherein the attributes include an attribute indicating that an object is actually mobile and an attribute indicating that an object is actually immobile, and
wherein the attribute object is an object indicating that the object is actually mobile and/or the object is actually immobile.
